# EUROPÄISCHE PATENTANMELDUNG

(11) **EP 4 603 282 A1**
(43) Veröffentlichungstag der Anmeldung: **20.08.2025**
(21) Anmeldenummer: 24158048.9
(22) Anmeldetag: 16.02.2024
(51) Int. Cl.: B33Y 10/00, H02K 15/02, H02K 15/10

(54) **VERFAHREN ZUR HERSTELLUNG EINES MAGNETBLECHS FÜR EINE ELEKTRISCHE MASCHINE, BLECHPAKET UND ELEKTRISCHE MASCHINE**

(71) Anmelder: Siemens Aktiengesellschaft, 80333 München (DE)
(72) Erfinder: Denneler, Stefan, 81371 München (DE); Rieger, Gotthard, 80636 München (DE); Schmidt, Alexander, 84034 Landshut (DE); Schuh, Carsten, 85598 Baldham (DE)
(74) Vertreter: Siemens Patent Attorneys

(57) **Zusammenfassung**

Die Erfindung betrifft ein Verfahren zur Herstellung eines Magnetblechs (2) für eine elektrische Maschine, umfassend folgende Schritte:
- Aufbringen einer anorganischen, elektrisch isolierenden Schicht auf ein Substrat (6) mit einer Schichtdicke (8) von weniger als 20 µm mittels eines Dünnschichtverfahrens (15),
- in der Art, dass eine Oberflächenkontur (10) der elektrisch isolierenden Schicht (4) im Wesentlichen einer Endkontur des Magnetblechs (12) entspricht,
- Aufbringen einer metallischen Schicht (14) auf die elektrisch isolierende Schicht (4),
- wobei die metallische Schicht (14) eine Schichtdicke (16) von weniger als 200 µm aufweist und
- organische Bindemittel umfasst,
- so dass ein Schichtlaminat (18-1) entsteht,
-Ablösen des Schichtlaminats (18-1) vom Substrat (6),
- Entfernung der Bindemittel aus der metallischen Schicht (14),
- Zuführen des entbinderten Schichtlaminats (18-2) zu einem Sinterprozess (20) und Sintern des Magnetblechs (2).

## Beschreibung

Die Erfindung betrifft ein Verfahren zur Herstellung eines Magnetblechs für eine elektrische Maschine nach dem Patentanspruch 1, ein Blechpaket nach Anspruch 14 und eine elektrische Maschine nach Anspruch 15.

In herkömmlichen elektrischen Maschinen weist der Stator oder auch der Rotor ein Blechpaket auf, um den elektrische Leiter gewickelt sind. Dieses Blechpaket besteht aus einer Vielzahl einzelner Magnetbleche, die übereinandergestapelt sind. In den allermeisten Fällen werden diese Blechpakete aus einem sogenannten Coil, das aus dem gewünschten Material, beispielweise einer weichmagnetischen Eisenlegierung besteht, herausgestanzt. Aus motortechnischen Gründen ist es zur Erreichung einer möglichst hohen Leistungsdichte zweckmäßig, die einzelnen Magnetbleche des Magnetblechstapels oder des Blechpaketes möglichst dünn zu gestalten. Die aus einer Folie oder einem Coil ausgestanzten Magnetbleche erreichen mit herkömmlichen technischen Mitteln eine Dicke, die nicht geringer als 200 µm bis 300 µm ist. Aus diesem Grund ist man in letzter Zeit dazu übergegangen, durch ein Schablonendruckverfahren, das auch ein Siebdruckverfahren einschließt, Magnetbleche möglichst endkonturnah in einem Grünzustand zu drucken. Ein Beispiel für diese Technologie zur Herstellung von Magnetblechstapeln mit endkonturnahem Siebdruck ist in der EP 4060882A1 gegeben. Ein weiteres Beispiel für diese Siebdrucktechnologie ist in der EP 3595148B1 dargestellt.

Bei der Herstellung von herkömmlichen Magnetblechen durch Ausstanzen dieser aus einem fortlaufenden Coil entsteht eine sehr große Menge von Abfall, die grundsätzlich im Hochofen als Eisenwertstoff wiederverwertet werden kann, aber der Herstellungsprozess für ein neues Herstellen von entsprechenden Hochleistungsmaterialien ist entsprechend teuer. Ferner ist durch diese Technologie kaum oder nur sehr begrenzt die entsprechende Schichtdicke für Motoren mit einer hohen Leistungsdichte zu erreichen. Das Drucken von Magnetblechen mittels Schablonen ist für eine große Endfertigung nur mit einem sehr hohen Investitionsaufwand der Fertigungsanlagen zu erzielen.

Die Aufgabe der Erfindung besteht darin, ein Verfahren zur Herstellung eines Magnetblechstapels für eine elektrische Maschine, insbesondere einen Elektromotor mit einer gegenüber dem Stand der Technik höheren Leistungsdichte und höheren mechanischen Festigkeit bereitzustellen, der großtechnisch gegenüber den bekannten Verfahren mit einem geringeren Aufwand an Fertigungsanlagen darstellbar ist.

Die Lösung der Aufgabe besteht in einem Verfahren zur Herstellung eines Magnetblechs mit den Merkmalen des Patentanspruchs 1, in einem Blechpaket nach Anspruch 14 und in einer elektrischen Maschine nach Anspruch 15.

Die Lösung der Aufgabe besteht gemäß Patentanspruch 1 in einem Verfahren zur Herstellung eines Magnetblechs für eine elektrische Maschine und umfasst dabei folgende Schritte:
- Aufbringen einer anorganischen, elektrisch isolierenden Schicht auf ein Substrat mit einer Schichtdicke von weniger als 20 µm mittels eines Dünnschichtverfahrens,
- in der Art, dass eine Oberflächenkontur der elektrisch isolierenden Schicht im Wesentlichen einer Endkontur des Magnetblechs entspricht,
- Aufbringen einer metallischen Schicht auf die elektrisch isolierende Schicht,
- wobei die metallische Schicht eine Schichtdicke von weniger als 200 µm aufweist und
- organische Bindemittel umfasst,
- sodass ein Schichtlaminat entsteht,
- Ablösen des Schichtlaminats vom Substrat,
- Entfernen der Bindemittel aus der metallischen Schicht,
- Zuführen des entbinderten Schichtlaminats zu einem Sinterprozess und Sintern des Magnetblechs.

Der wesentliche Unterschied des vorliegenden Verfahrens gegenüber den im Stand der Technik beschriebenen Methoden besteht darin, dass eine elektrisch isolierende Schicht bereits auf das Substrat aufgebracht wird, bevor die eigentliche, funktional wirkende metallische Schicht des Magnetblechs auf das Substrat aufgebracht wird. Dabei weist die elektrisch isolierende Schicht bereits nahezu die Endkontur des Magnetblechs auf und es wird hierauf die Magnetblechstruktur aufgebracht. Hierbei ist zu dem Begriff Oberflächenkontur der elektrisch isolierenden Schicht zu sagen, dass diese grundsätzlich zwar im Wesentlichen einer Endkontur des Magnetblechs entspricht, aber zum einen verfahrenstechnische Toleranzen und andererseits einen möglichen Sinterschwund während des Sinterprozesses bei der Formgebung der Oberflächenkontur mitberücksichtigt werden. Allgemein versteht man unter dem Begriff Oberflächenkontur einer hier beschriebenen Schicht oder des Magnetblechs jeweils die senkrechte Projektionsfläche des Bleches oder der Schicht auf das Substrat. Der Vorteil, der sich aus dem beschriebenen Verfahren ergibt, besteht vor allem gegenüber herkömmlich gedruckten Magnetblechen darin, dass die im späteren Blechpaket benötigte elektrisch isolierende Schicht bereits miterzeugt wird und sie nicht anschließend nach dem Sinterprozess noch aufgebracht werden muss. Dies erspart ein mögliches Vereinzeln von Magnetblechen, die gegebenenfalls im Magnetblechstapel gesintert werden und das mögliche Beseitigen von für diesen Stapel nötige Trennschichten. Somit wird eine großtechnische Prozessführung für die Herstellung von Magnetblechen bzw. Blechpaketen weiter optimiert.

Die metallische Schicht, also die Schicht, die im weiteren Verlauf nach dem Sinterprozess das eigentlich funktional wirkende Magnetblech bildet, wird bevorzugt mittels eines Rakelverfahrens aufgebracht. Unter einem Rakelverfahren wird ganz allgemein ein Verfahren verstanden, bei dem eine funktionale Materialpaste mittels eines Rakels auf ein Substrat in Form einer dünnen Schicht aufgebracht wird. Hierzu gehört einerseits das sogenannte Schablonendruckverfahren, wobei eine Spezialform des Schablonendruckverfahrens das Siebdruckverfahren ist. Insbesondere durch das Siebdruckverfahren lassen sich metallische Schichten von deutlich unter 200 µm reproduzierbar herstellen und diese weisen dabei konstante Schichtdicken auf. Ein alternatives Rakelverfahren ist ein Schlickerverfahren, bei dem ebenfalls einer Materialpaste, die in diesem Fall eine niedrigere Viskosität aufweist, auch mittels eines Rakels auf ein Substrat verteilt wird. Auch hier können Schablonen zum Einsatz kommen, sodass endkonturnahe flächige Strukturen ausgebildet werden können. Es ist jedoch auch möglich ein durchgehendes sogenanntes Greentape herzustellen, das anschließend mittels eines Strukturierverfahrens herausgetrennt wird. Hierbei kann beispielsweise ein Ausstanzen oder einer Lasertrennverfahren angewandt werden.

Unter einer Materialpaste wird hierbei ein Fluid verstanden, das zum einen funktional wirkende anorganische Partikel (Metallpartikel oder Keramikpartikel) aufweist, zum anderen umfasst die Materialpaste organische und/oder anorganische Hilfsstoffe insbesondere Lösungsmittel (wässrig oder organisch), die zu einer gewünschten Viskosität beitragen und ferner gegebenenfalls Bindemittel, Plastifizierer, Weichmacher, Dispergatoren und/oder Entschäumer umfassen. Insbesondere Bindemittel sind für die Herstellung eine handhabbaren Grünkörpers nach einem Trocknungsprozess sehr vorteilhaft. Je nach Viskosität der Materialpaste kann dieser gezogen oder gegossen werden (Ziehschlicker, Gießschlicker), bei sehr niedrigen Viskosität kann die Materialpaste versprüht werden (Sprühschlicker) oder bei einer hohen Viskosität auch gedruckt werden (beispielsweise im Siebdruck oder Schablonendruck). Hierbei spricht man von einer Druckpaste. Somit fallen sowohl Schlicker als auch Druckpasten unter den Begriff Materialpaste.

Die beschriebenen Verfahren zur Darstellung der metallischen Schicht, insbesondere das Schablonendruckverfahren und das Siebdruckverfahren sind für eine weitere vorteilhafte Ausgestaltungsform der Erfindung geeignet, wonach eine Oberflächenkontur der metallischen Schicht durch mindestens zwei sequenzielle Auftragungsschritte entsteht. Hierbei werden mindestens zwei Materialpasten mit unterschiedlichen metallischen Komponenten aufgebracht. Dabei wird in einem ersten Auftragungsschritt eine erste Teilkontur der Oberflächenkontur mit einer ersten Materialpaste erzeugt und in einem zweiten Auftragungsschritt eine zweite Teilkontur der Oberfläche mit einer zweiten Materialpaste hergestellt. Auf diese Weise ergänzen die beiden Teilkonturen sich im Wesentlichen überlappungsfrei zur Oberflächenkontur der metallischen Schicht. Auch hier ist der Begriff Oberflächenkontur so zu verstehen, dass es sich hierbei endkonturnah um die Kontur des fertigen Magnetblechs handelt, wobei jedoch prozessbedingte Ungenauigkeiten und Prozessschwindungen einkalkuliert werden. Der Begriff überlappungsfrei bedeutet dabei, dass zwar eine Anbindung der beiden Teilbereiche senkrecht zur Oberfläche der metallischen Schicht entsteht, diese jedoch im Idealfall sternförmig aneinander anstoßen. Durch prozessbedingte Toleranzen kann es zu leichten Überlappungen in diesem Grenzbereich kommen. Diese sind jedoch bezüglich des Prozesses möglichst zu vermeiden.

Durch diese beschriebenen Teilkonturen können Magnetbleche erzeugt werden, die mindestens zwei verschiedene Materialkomponenten aufweisen. Das bringt den Vorteil mit sich, dass z. B. eine Teilkontur mit einem Material ausgestattet wird, das bezüglich der magnetischen Eigenschaften für das spätere Magnetblech optimiert ist. Die andere Teilkontur kann dabei mit einer Materialpaste beispielsweise unmagnetischen Stahlpartikeln versehen sein, die im späteren Magnetblech eine hohe mechanische Festigkeit mit sich bringt. Somit kann das Magnetblech aus mindestens zwei verschiedenen Komponenten bestehen, einer magnetisch optimierten Komponente und einer mechanisch optimierten Komponente, was gegenüber einem herkömmlichen, aus einem durchgehenden Blech ausgestanzten Magnetblech einen erheblichen Vorteil darstellt.

Die magnetisch optimierte Komponente umfasst dabei bevorzugt metallische Partikel, die ein weichmagnetisches Verhalten aufweisen, sich also in einem wechselnden magnetischen Feld leicht ummagnetisieren lassen. Hierbei ist es zweckmäßig, wenn die weichmagnetischen Partikel mindestens 96 Gewichtsprozent Eisen enthalten, wobei Reineisen mit 100 % die bestmagnetischen Eigenschaften aufweist.

Bei den unmagnetischen Stahlpartikeln, die eine hohe Festigkeit bewirken sollen, hat sich herausgestellt, dass insbesondere eine Eisen-Chrom-Legierung für die Ausbildung von metallischen Phasen mit einer hohen mechanischen Stabilität zweckmäßig sind.

Dabei weist in einer Ausgestaltungsform der Erfindung die metallische Schicht ebenfalls im Wesentlichen die Endkontur des Magnetblechs auf und ist möglichst überdeckend direkt auf die elektrisch isolierende Schicht aufgebracht. Dies kann wie bereits beschrieben durch ein Rakelverfahren erfolgen, insbesondere sollte hierbei eine Schablone zum Einsatz kommen. Durch diese Maßnahme wird der Materialverbrauch und der Rezyklierbedarf an Materialpaste für die metallische Schicht optimiert.

In einer weiteren Ausgestaltungsform der Erfindung wird die elektrisch isolierende Schicht durch ein Dünnschichtverfahren in Form eines Sprühverfahrens oder ebenfalls eines Rakelverfahrens, insbesondere ein Schablonen- oder Siebdruckverfahren oder ein Schlickerverfahrens, aufgebracht. Alle genannten Verfahren sind dazu geeignet, Schichten von der gewünschten Schichtdicke herzustellen. Insbesondere das Sprühverfahren kann dazu herangezogen werden, sehr genaue Konturen zu erzeugen. Hier ist es ebenfalls zweckmäßig, wenn wiederum eine Schablone entsprechend zum Einsatz kommt.

Als grundsätzlich elektrisch isolierendes Material für die isolierende Schicht bieten sich die Oxide, Nitride, Cabo Oxide, Carbonate, Ferrite an. Insbesondere hat sich das Aluminiumoxid oder das Eisentitanat als zweckmäßig herausgestellt.

In einer weiteren vorteilhaften Ausgestaltungsform der Erfindung werden mehrere Schichtlaminate, die im Wesentlichen die Endkontur des Magnetblechs aufweisen, in einem Grünzustand zu einem Stapel zusammengeführt. Sie werden anschließend als Stapel im Grünzustand dem Sinterprozess zugeführt. Hierbei wird unter dem Begriff Grünzustand der nicht gesinterte Zustand des Magnetblechs bzw. des Laminats verstanden. Unter dem nicht gesinterten Zustand wird dabei zwischen dem entbinderten und nicht entbinderten Grünzustand unterschieden. Beim Aufbringen der Materialpaste auf das Substrat weist diese in der Regel organische Bindemittel auf. Diese organischen Bindemittel werden durch einen Entbinderungsprozess in der Regel thermisch zersetzt und aus dem Grünkörper ausgegast. Nach diesem Entbinderungsprozess spricht man von einem entbinderten Grünzustand. In diesem Zustand liegen die einzelnen Partikel in den meisten Fällen lediglich durch eine mechanische Verklammerung ineinander gepresst vor, sodass dieses Gebilde eine mechanische Festigkeit aufweist, die eine grundsätzliche Handhabung ermöglicht. Erst durch den Sinterprozess, der in der Regel unterhalb des Schmelzpunktes der verwendeten Partikel stattfindet, wird durch Diffusionsprozesse an den Berührungspunkten der einzelnen Partikel sogenannte Sinterhälse ausgebildet, die sich im Idealfall so weit ausdehnen, dass nahezu ohne das Auftreten einer Schmelzphase eine Verdichtung des zusammengepressten Materials und eine monolithische Ausgestaltung des Mikrogefüges eintritt. Schmelzphasen können temporär und lokal begrenzt jedoch auch gelegentlich bei Sinterprozessen auftreten.

In einer weiteren vorteilhaften Ausgestaltungsform der Erfindung wird das Substrat beispielsweise in Form eines Förderbandes kontinuierlich bewegt und die elektrisch isolierende Schicht und die metallische Schicht mittels stationärer Vorrichtungen auf das Substrat aufgebracht. Dies erhöht die Möglichkeit großtechnischer Prozesse wirtschaftlich besser zu gestalten.

Ein weiterer Bestandteil der Erfindung besteht in einem Blechpaket für eine elektrische Maschine umfassend einen Stapel von Magnetblechen, wobei das Blechpaket abwechselnd eine metallische Schicht und eine elektrisch isolierende, anorganische, nichtmetallische Schicht aufweist, wobei das Blechpaket mittels eines Verfahrens nach einem der Ansprüche 1 bis 13 bereitgestellt wird. Das beschriebene Blechpaket weist die Vorteile auf, dass es gegenüber herkömmlichen Blechpaketen bessere elektrische Eigenschaften aufweist und dabei großtechnisch mit einem geringeren technischen Aufwand herstellbar ist.

Ferner ist Bestandteil der Erfindung eine elektrische Maschine, die ein beschriebenes Blechpaket nach Anspruch 14 als Rotor oder Stator umfasst.

Weitere Ausgestaltungsformen und weitere Merkmale der Erfindung werden anhand der folgenden Figuren näher erläutert. Dabei handelt es sich um rein schematische Ausgestaltungsformen, die weder maßstabsgetreu sind noch eine Einschränkung auf diese Darstellung des Schutzbereichs darstellen. Dabei zeigen:
- Figur 1: eine Explosionsdarstellung einer elektrischen Maschine Rotor, Stator und Gehäuse,
- Figur 2: eine schematische Darstellung der Fertigung von Magnetblechen und Blechpaketen,
- Figur 3: eine schematische Darstellung analog zu Figur 2 in alternativer Ausgestaltung,
- Figur 4: ein Beispiel für ein Blechpaket und dessen Geometrie,
- Figur 5: ein alternatives Beispiel für ein Blechpaket,
- Figur 6: eine Draufsicht auf ein Blechpaket mit zwei verschiedenen Teilkonturen, wobei die Draufsicht eine Endkontur darstellt,
- Figur 7: einen Querschnitt entlang der Linie VII in Figur 6,
- Figur 8: eine Darstellung der Grenzfläche zwischen der metallischen Schicht und der elektrisch isolierenden Schicht in entbindertem Grünzustand und
- Figur 9: die Grenzfläche nach Figur 8 im gesinterten Zustand.

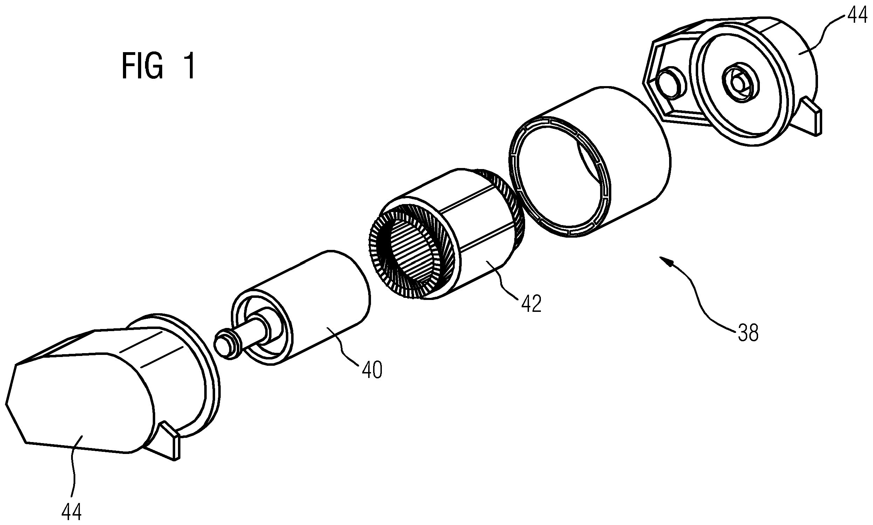

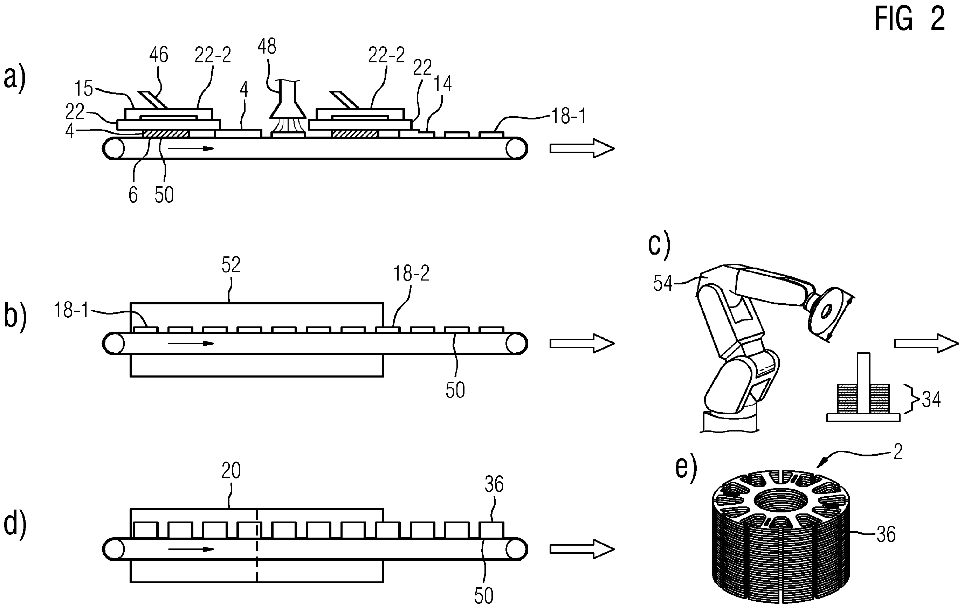

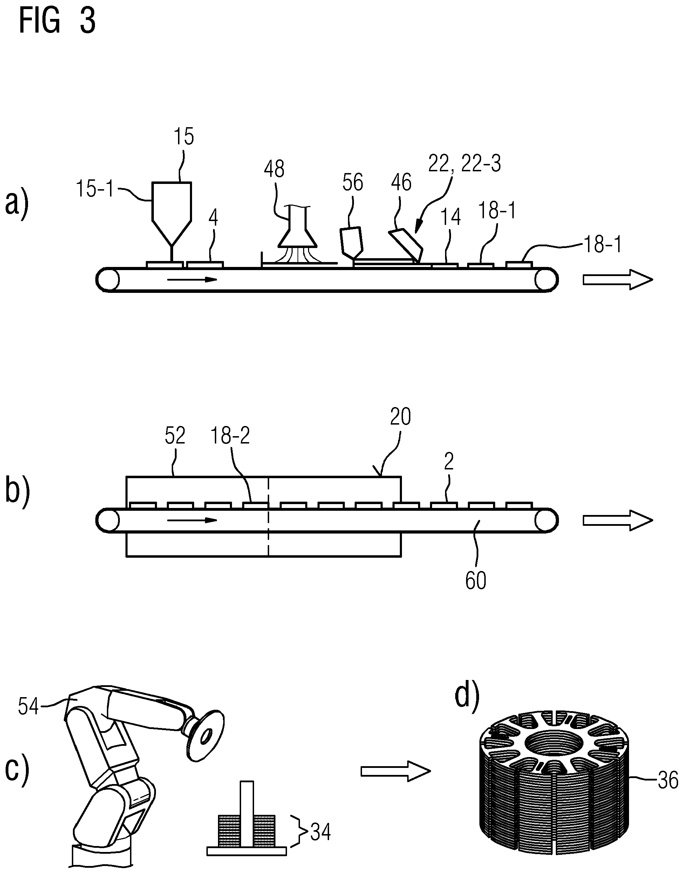

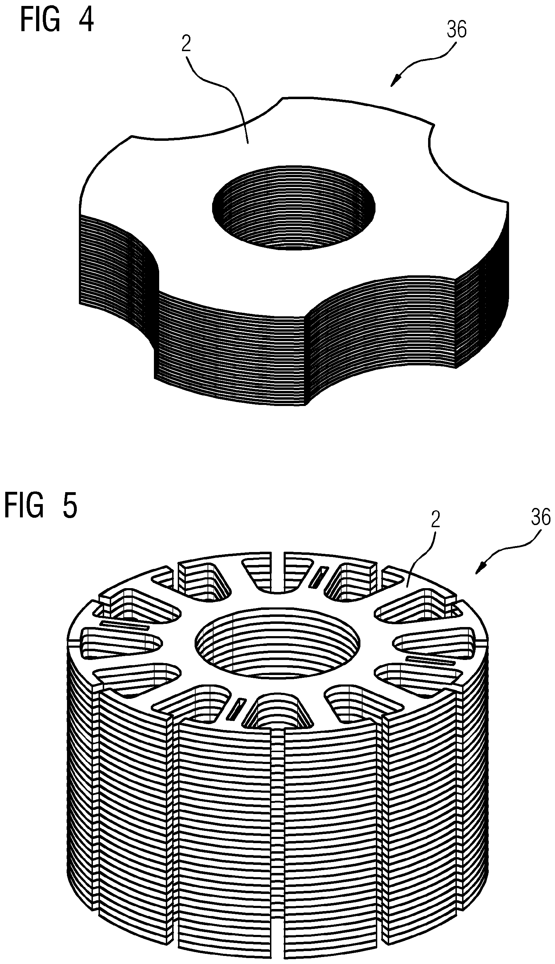

Zur besseren Übersicht der Anordnung der Bauteile, die mit dem beschriebenen Verfahren erzeugt werden, in einer elektrischen Maschine, wird zunächst in Figur 1 eine Explosionsdarstellung einer elektrischen Maschine 38 gezeigt. Hierbei handelt es sich um einen Elektromotor, ebenso gut kann diese elektrische Maschine 38 auch ein Generator sein. Sie weist ein Gehäuse 44 auf, das im Wesentlichen einen Rotor 40 und einen Stator 42 umgibt. In dem Rotor 40 und dem Stator 42 sind, hier nicht näher dargestellt, Blechpakete 36 in unterschiedlichen geometrischen Ausgestaltungen angeordnet, wie sie beispielsweise in den Figuren 2e, 3d sowie in den Figuren 4 und 5 abgebildet sind.

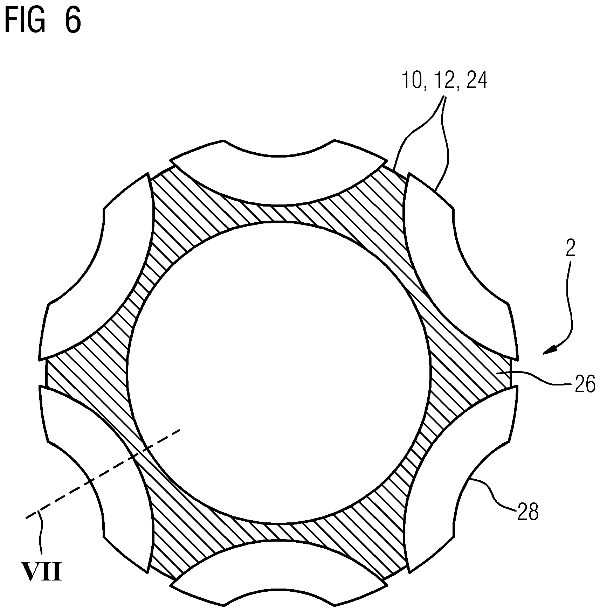

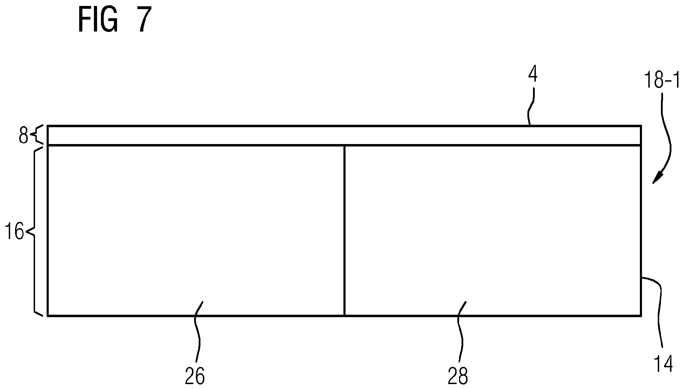

In Figur 2 ist eine schematische Darstellung des Fertigungsprozesses eines Magnetblechs 2 und im weiteren Verlauf eines Blechpaketes 36 veranschaulicht. Hier wird zunächst auf ein Substrat 6, das in Form eines Förderbandes 50 ausgestaltet ist, eine elektrisch isolierende Schicht 4 aufgebracht. Hierzu wird ein Rakelverfahren 22 in Form eines Siebdruckverfahrens 22-2 angewandt. Hierzu wird ein Rakel 46 über eine hier nicht näher abgebildete Schablone und ein darin befindliches Sieb (ebenfalls nicht detailliert abgebildet) gefahren, wobei eine ebenfalls nicht dargestellte Materialpaste auf das Substrat 6 aufgebracht wird. Es wird somit die Schicht 4 ausgebildet, die im Wesentlichen die Endkontur 12 eines Magnetblechs 2, beispielsweise in Figur 6 veranschaulicht, aufweist. Die Schichtdicke 8 der elektrisch isolierenden Schicht 4 ist gemäß Figur 7 veranschaulicht und weist in diesem Fall 4 µm auf. Die Schicht 4 wird mittels einer Trocknungsvorrichtung 48 angetrocknet, sodass in einem weiteren Rakelverfahren 22 ebenfalls in Form eines Siebdruckverfahrens 22-2 eine metallische Schicht 14 auf die Oberflächenkontur 10 der elektrisch isolierenden Schicht 4 aufgebracht wird. Dabei sind die Oberflächenkonturen 24 der metallischen Schicht 14, die Oberflächenkontur 10 der isolierenden Schicht 4 im Rahmen der Prozessgenauigkeit im Wesentlichen deckungsgleich mit der Endkontur 12 des Magnetblechs, wobei hierbei ein sogenannter Sinterschwund, also eine Verkleinerung der Oberflächenkontur während des Sinterprozesses miteinberechnet ist.

Durch dieses Aufdrucken mittels des Siebdruckverfahrens 22-2 der metallischen Schicht 14 auf die isolierende Schicht 4 entsteht ein Schichtlaminat 18-1 in nicht entbindertem Grünzustand. Dieses Schichtlaminat 18-1 wird nun einem Entbinderungsprozess 52 (Figur 2b) zugeführt, in dem Bindemittel, die in den jeweiligen Materialpasten für die Schicht 4 und die metallische Schicht 14 enthalten sind, thermisch bei etwa 350°C zersetzt werden. Wenn das Laminat den Entbinderungsofen 52 verlässt, wird von einem entbinderten Schichtlaminat 18-2 gesprochen. Im Weiteren wird in diesem Einschub auf die Zusammensetzung und die Viskosität einer typischen Materialpaste zur Herstellung der metallischen Schicht 14 eingegangen.

Je nach Viskosität einer Materialpaste wird bezogen auf die übliche Anwendung dieser Materialpaste von einem Schlicker oder einer Siebdruckpaste gesprochen. Als Beispiel für eine Materialzusammensetzung für eine niedrigviskose Materialpaste in Form eines Schlickers, wie er im Beispiel gemäß Figur 3 eingesetzt wird, sei diese wie folgt beschrieben.

Diese Materialpaste weist als zentralen, funktionalen Bestandteile ein Pulver auf, das anorganische, in der Regel metallische Partikel, hier in Form von 96 %igem Eisen mit weichmagnetischen Eigenschaften umfasst. Dieses anorganische Pulver wird in einem flüssigen Trägermaterial dispergiert. Das flüssige Trägermaterial ist für eine großtechnische Herstellung in kostengünstiger Weise bevorzugt auf Wasserbasis ausgestaltet. Dem flüssigen Trägermaterial können jedoch auch noch weitere funktionale flüssige Bestandteile zugesetzt sein. Diese können ganz oder teilweise Alkohole, Ether, Ester, Ketone, Amine, Amide, Säuren, Laugen oder ganz allgemein Kohlenwasserstoffe wie beispielweise Pentan, Hexan, Heptan oder Benzol-Derivate sein. Die genannten Stoffe können einzeln oder auch als Beimengung oder Mischungen vorliegen und somit das flüssige Trägermittel bilden. Dabei ist auch ein hoher Wasseranteil von 90 % und mehr vorteilhaft, da dies großtechnisch günstig darstellbar ist. Das Eisenpulver hat dabei in dieser Ausgestaltungsform einen dso-Wert von 50 µm. Das bedeutet, dass 50 % der einzelnen Partikel 5 einen kleineren Durchmesser als 50 µm haben. Der maximale Durchmesser sollte nicht mehr als 100 µm sein.

Ferner ist es nötig, der Materialpaste noch ein Bindemittel, insbesondere ein organisches Bindemittel zuzuführen. Hierbei gibt es eine Auswahl aus einer Vielzahl organischer Bindemittel, z.B. Zellulosen, Polyvinylalkohole, Polyvinylacetate (PVA) oder Polyvinylbutyrale (PVB) sowie Acrylatdispersionen. Dieses organische Bindemittel dient zur Verfestigung der anorganischen Partikel in einem Grünzustand nach einem Trocknen und somit nach dem zumindest teilweise Beseitigen des flüssigen Trägermittels.

Ein Beispiel für die Zusammensetzung einer Materialpaste in Form eines Schlickers mit einer relativ niedrigen Viskosität ist wie folgt gegeben:

**wässrige Gewicht / Volumen / Siebdruckpaste Beispiel g Gewichts-% cm³ Volumen %**

| | | | | | |
|---|---|---|---|---|---|
| **Pulver** | Reineisen | 4125 | 82,5% | 532,2580645 | 40,9% |
| **Sinteradditiv** | Fe3P | 121,6 | 2,4% | 18,04154303 | 1,4% |
| **Träger** | H2O | 480 | 9,6% | 480 | 36,8% |
| **Dispergator** | Disperbyk 190 | 61,8 | 1,2% | 63,06122449 | 4,8% |
| **Binder** | Tylose | 40,5 | 0,8% | 36,81818182 | 2,8% |
| **Weichmacher** | Glycerin | 50 | 1,0% | 51,02040816 | 3,9% |
| **Entschäumer** | Agitan 299 | 24 | 0,5% | 24,48979592 | 1,9% |
| **Stellmittel** | Lubranil RN20 | 85 | 1,7% | 86,73469388 | 6,7% |
| **Antioxidationsmittel** | | 10 | 0,2% | 10,20408163 | 0,8% |
| **Thixotropiemittel** | | 0 | 0,0% | 0 | 0,0% |

Eine alternative Zusammensetzung eines Materialpaste ist wie folgt angegeben:

**Volumen organische Paste Beispiel Gewicht Gewichts-% Volumen %**

| | | | | | |
|---|---|---|---|---|---|
| **Pulver** | Reineisen | 8500 | 85,0% | 1096,77419 | 45,7% |
| **Sinteradditiv** | FePO4 | 286,8 | 2,9% | 99,9303136 | 4,2% |
| **Träger** | Terpiniol | 920 | 9,2% | 920 | 38,3% |
| **Dispergator** | KD11 | 80,8 | 0,8% | 82,4489796 | 3,4% |
| **Binder** | PVB | 132 | 1,3% | 120 | 5,0% |
| **Weichmacher** | DOA | 70 | 0,7% | 71,4285714 | 3,0% |
| **Entschäumer** | | 0 | 0,0% | 0 | 0,0% |
| **Stellmittel** | | 0 | 0,0% | 0 | 0,0% |
| **Antioxidationsmittel** | Thixatrol | 10 | 0,1% | 10,2040816 | 0,4% |

Durch die Variation des Anteils des Trägermittels, in diesem bevorzugten Fall des Wassers und durch die Variation der Zusatzstoffe, wie beispielsweise des Stellmittels oder des

Thixotropiemittels kann die Viskosität der Materialpaste entsprechend der Anforderungen der Auftragungsmethode angepasst werden.

Das Eisenpulver enthält Verunreinigungen von Sauerstoff, Kohlenstoff, Stickstoff und Schwefel, wobei die stärkste Verunreinigung Sauerstoff ist, die allerdings höchstens 0,22 Gew. % beträgt. Die übrigen Verunreinigungen weisen weniger als 0,02 Gew. % auf. Auch Eisenlegierungen die bis zu 4 Gew. % Silizium aufweisen, können als weichmagnetische Partikel Bestandteil der Materialpaste sein. Die Kornverteilung der Eispartikel des zweiten Beispiels ist wie folgt angegeben:

| | |
|---|---|
| D₁₀ | 3.71 µm |
| D₅₀ | 5.74 µm |
| D₉₀ | 10.05 µm |

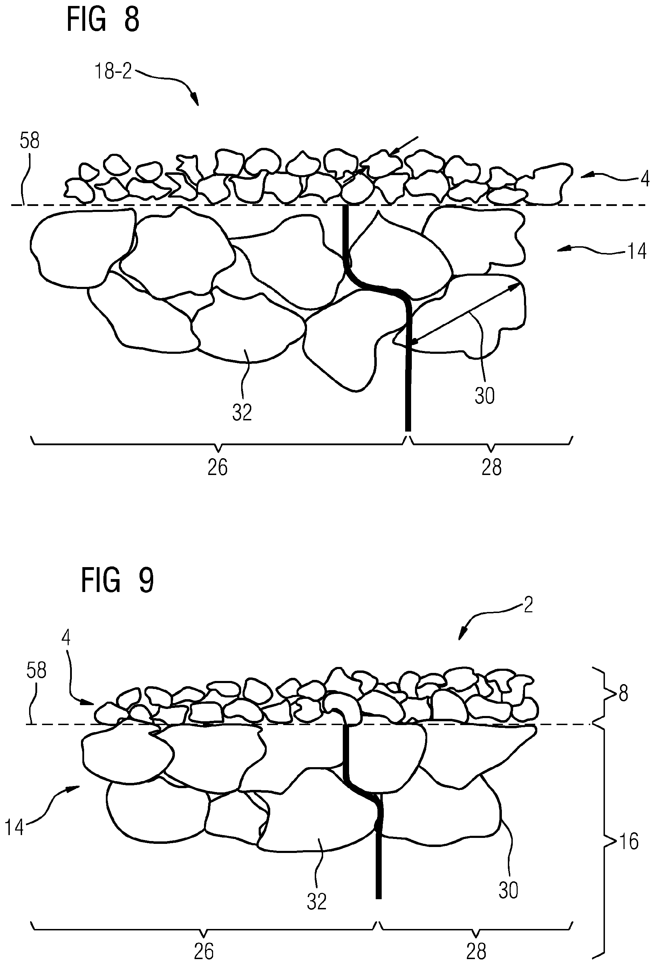

Im weiteren Verlauf gemäß Figur 2c wird das so dargestellte entbinderte Schichtlaminat 18-2 mittels eines Roboterarms 54 zu einem Stapel 34 gestapelt. Dieser Stapel 34 ist ein Magnetblechstapel, der in dem hier noch ungesinterten Zustand, also im entbinderten Grünzustand, vorliegt. Dieser Stapel 34 wird nun einem Sinterprozess 20 zugeführt, bei dem bei ca. 1000°C über ca. sechs Stunden dieser zum endgültigen Magnetblechstapel 36 gesintert wird. Der Magnetblechstapel 36 weist somit eine Vielzahl von Magnetblechen 2 auf, die durch die elektrisch isolierende Schicht 4 voneinander eben elektrisch isoliert werden. Über die Mikrostruktur an den Grenzflächen zwischen der jeweiligen metallischen Schicht des Magnetblechs 2 und der elektrisch isolierenden Schicht 4 wird bezüglich der Figuren 8 und 9 näher eingegangen.

Bei der Darstellung gemäß Figur 2d wird ein Sinterprozess in Form eines kontinuierlich verlaufenden Durchlaufofens dargestellt. Grundsätzlich können die Sinterprozesse auch in stationären Öfen ohne Durchlauf erzeugt werden. Dies hat den Vorteil, dass eine kontrolliertere Sinteratmosphäre geschaffen werden kann als dies bei Durchlauföfen der Fall ist. Durchlauföfen haben jedoch den Vorteil, dass sie produktionstechnisch wirtschaftlicher betrieben werden können. Gemäß Figur 2 werden somit zwei Siebdruckverfahren zur Aufbringung der Schichten 4 und 14 angewandt, wobei nach dem Entbindern und folgenden Sintern ein Stapel 34 erstellt wird. Hierbei handelt es sich um Alternativen, die in diesem Fall so kombiniert sind. Grundsätzlich ist es auch möglich diese Alternativen anderweitig zu kombinieren.

Ein Beispiel hierfür ist in Figur 3 dargestellt. Hier wird die elektrisch isolierende Schicht 4 nicht mittels eines Rakelverfahrens, sondern mit einem Sprühverfahren 15-1 aufgebracht, was ebenfalls ein Dünnschichtverfahren 15 darstellt. Es folgt ein Trocknungsprozess 48 und im Anschluss wird wiederum durch ein Rakelverfahren 22, allerdings in Form eines Schlickerverfahrens 22-3 die metallische Schicht 14 aufgebracht. Hierbei wird mittels einer Schlickerdosiervorrichtung 56 und des Rakels 46 ebenfalls wieder durch eine Schablone eine Schlickerschicht aufgebracht, die gegenüber der Alternativen 22-1 in Figur 2a eine Materialpaste mit einer niedrigen Viskosität umfasst.

Das so entstandene Schichtlaminat 18-1 wird wieder analog zur Figur 2b in einem Entbinderungsprozess 52 entbindert und anschließend in einem Sinterprozess 20 zum Magnetblech 2 gesintert. In der Darstellung gemäß Figur 3b ist der Entbindungsprozess 52 und der Sinterprozess 20 in einem Durchlaufofen kombiniert, was ebenfalls prozessuale Vorteile mit sich bringt. Ein weiterer Unterschied zwischen der Ausgestaltung in Figur 2 besteht nun darin, dass das gesinterte Magnetblech 2, das die Schicht 4 aufweist, nun zu einem Stapel 34' gestapelt wird, was dann bereits das Blechpaket 36 ergibt. Dabei ist darauf hinzuweisen, dass sowohl die Stapelmöglichkeiten und die Aufbringungsverfahren jeweils von den in Figur 2 und 3 beschriebenen Varianten nahezu beliebig kombinierbar sind. Die Anwendung für das jeweilige Verfahren entscheidet insbesondere die Anforderung für das Magnetblech und die entsprechende Materialpaste.

In den Figuren 4 und 5 sind zwei typische Beispiele für die Geometrie von Magnetblechstapel 36, die eine Vielzahl von Magnetblechen 2 umfassen, dargestellt. Die Magnetbleche 2 sind jeweils von hier nicht erkennbaren elektrisch isolierenden Schichten 4 getrennt.

In Figur 6 ist die Draufsicht auf ein Magnetblech 2 und somit dessen Endkontur 12 veranschaulicht. Die in Figur 6 beschriebene Endkontur 12 des Magnetblechs 2 unterscheidet sich von den bisher dargestellten Magnetblechen 2 darin, dass hier zwei Teilkonturen 26 und 28 vorgesehen sind. Die erste Teilkontur 26 ist dabei durch einen unmagnetischen hochfesten Stahl einer Eisen-Chrom-Nickel-Legierung ausgestaltet. Diese Teilkontur 26 bietet dabei eine sehr hohe Festigkeit, die insbesondere bei Rotoren 40 bei hohen Umdrehungsgeschwindigkeiten vorteilhaft für die mechanische Stabilität des Blechpaketes 36 ist. Die zweite Teilkontur 28 hingegen ist insbesondere auf ihre weichmagnetischen Eigenschaften optimiert. Hier liegt ein Material vor, das im Wesentlichen aus Reineisen, bevorzugt bei ca. 99 % liegt. 99 %iges Reineisen hat ein besonders hohes weichmagnetisches Verhalten und lässt sich besonders leicht ummagnetisieren.

Entlang der gestrichelten Linie VII in Figur 6 ist ein typischer Querschnitt durch das Magnetblech 2 in nicht maßstabsgetreuer Form in Figur 7 schematisch abgebildet. Hierbei ist anzumerken, dass die elektrisch isolierende Schicht 4 eine Schichtdicke 8 aufweist, die zwischen 4 µm und 5 µm beträgt und somit deutlich dünner ist als die metallische Schicht 14, die eine Schichtdicke 16 von etwa 110 µm aufweist. Dieses Verhältnis ist nicht maßstabsgetreu in Figur 7 angedeutet. Es ist ferner schematisch in dieser Querschnittsdarstellung die erste Teilkontur 26 und die zweite Teilkontur 28 dargestellt, die unterschiedliche mechanische und magnetische Eigenschaften aufweisen, jedoch bevorzugt aus Eisenbasis bestehen.

Die in Figur 7 schematisch lediglich durch Linien getrennte einzelne Schichten und Materialbereiche werden in den Figuren 8 und 9 etwas detaillierter in ihren Grenzbereichen dargestellt. In Figur 8 ist eine Grenzfläche 58 zwischen der elektrisch isolierenden Schicht 4 und der metallischen Schicht 14 beschrieben. Es handelt sich bei der Darstellung gemäß Figur 8 um ein Schichtlaminat 18-2 in entbindertem Zustand. Im Gegensatz dazu wird in Figur 9 ein Magnetblech 2 im gesinterten Zustand beschrieben. Ferner sind die unmagnetischen Bereiche in Form der ersten Teilkontur 26 und die weichmagnetischen Bereiche in Form der zweiten Teilkontur 28 schematisch eingetragen.

In Figur 8 sind die einzelnen Partikel, die unmagnetischen Partikel 32 sowie die weichmagnetischen Partikel 30, lediglich durch Verpressen miteinander verklammert. Die Partikel 30, 32 sind in diesem Zustand immer noch vereinzelbar und als Partikel getrennt voneinander vorliegend. Die hier benannten Partikel der elektrisch isolierenden Schicht 4, die hier in Form von Aluminiumoxid vorliegen, sind ebenfalls lediglich mechanisch miteinander verklammert.

Nach dem Sinterprozess 20, in dem wie beschrieben, die einzelnen Partikel 32, 30 über Diffusionsprozesse zunächst Sinterhälse ausbilden und anschließend auch noch vorher vorhandene Poren ausfüllen, wird hier ein monolithisches Gefüge erzeugt. Dies weist eine hohe Festigkeit auf. Da der Sinterprozess jedoch für Sinterbedingungen der Eisenlegierungen optimiert ist, sind die Aluminiumoxid-Partikel der elektrisch isolierenden Schicht 4 noch nicht vollständig gesintert. Es bilden sich zwar während des Sinterprozesses auch bei dem Aluminiumoxid erste Sinterhälse aus, die eine höhere mechanische Stabilisierung als im Grünzustand darstellen, grundsätzlich weist die elektrisch isolierende Schicht 4 die zwar das Magnetblech 2 nahezu vollständig bedeckt nicht dieselbe Sinterverdichtung auf, wie dieses. Die Schicht 4 bleibt auch nach dem Sinterprozess noch leicht porös und sie bietet auch eine Möglichkeit zur Kompensation von thermischen Ausdehnungen des Magnetblechs 2 während des Betriebs und während des Sinterprozesses.

### Bezugszeichenliste

- 2: Magnetblech
- 4: elektrisch isolierende Schicht
- 6: Substrat
- 8: Schichtdicke der isolierenden Schicht
- 10: Oberflächenkontur der isolierenden Schicht
- 12: Endkontur eines Magnetblechs
- 14: metallische Schicht
- 16: Schichtdicke metallische Schicht
- 18-1: Schichtlaminat nicht entbindert
- 18-2: Schichtlaminat entbindert
- 20: Sinterprozess
- 22: Rakelverfahren
- 22-1: Schablonendruckverfahren
- 22-2: Siebdruckverfahren
- 22-3: Schlickerverfahren
- 24: Oberflächenkontur metallische Schicht
- 26: erste Teilkontur
- 28: zweite Teilkontur
- 30: weichmagnetische Partikel
- 32: unmagnetische Stahlpartikel
- 15: Dünnschichtverfahren
- 15-1: Sprühverfahren
- 34: Stapel
- 36: Blechpaket
- 38: elektrische Maschine
- 40: Rotor
- 42: Stator
- 44: Gehäuse
- 46: Rakel
- 48: Trocknungsvorrichtung
- 50: Förderband
- 52: Entbinderungsprozess
- 54: Rotorarm
- 56: Schlickerdosiervorrichtung
- 58: Grenzfläche

## Patentansprüche

1. Verfahren zur Herstellung eines Magnetblechs (2) für eine elektrische Maschine, umfassend folgende Schritte:
- Aufbringen einer anorganischen, elektrisch isolierenden Schicht auf ein Substrat (6) mit einer Schichtdicke (8) von weniger als 20 µm mittels eines Dünnschichtverfahrens (15),
- in der Art, dass eine Oberflächenkontur (10) der elektrisch isolierenden Schicht (4) im Wesentlichen einer Endkontur des Magnetblechs (12) entspricht,
- Aufbringen einer metallischen Schicht (14) auf die elektrisch isolierende Schicht (4),
- wobei die metallische Schicht (14) eine Schichtdicke (16) von weniger als 200 µm aufweist und
- organische Bindemittel umfasst,
- so dass ein Schichtlaminat (18-1) entsteht,
- Ablösen des Schichtlaminats (18-1) vom Substrat (6),
- Entfernung der Bindemittel aus der metallischen Schicht (14),
- Zuführen des entbinderten Schichtlaminats (18-2) zu einem Sinterprozess (20) und Sintern des Magnetblechs (2).

2. Verfahren nach Anspruch 1, **dadurch gekennzeichnet, dass** die metallische Schicht mittels eines Rakelverfahrens (22) aufgebracht wird.

3. Verfahren nach Anspruch 2, **dadurch gekennzeichnet, dass** die metallische Schicht mittels eines Schablonendruckverfahrens (22-1), insbesondere mittels eines Siebdruckverfahrens (22-2) aufgebracht wird.

4. Verfahren nach Anspruch 2, **dadurch gekennzeichnet, dass** die metallische Schicht mittels eines Schlickerverfahrens (22-3) aufgebracht wird.

5. Verfahren nach einem der vorhergehenden Ansprüche, **dadurch gekennzeichnet, dass**
- eine Oberflächenkontur der metallischen Schicht (24) durch mindestens zwei sequenzielle Auftragungsschritten entsteht,
- wobei mindestens zwei Materialpasten mit unterschiedlichen metallischen Komponenten aufgebracht werden,
- hierbei wird in einem ersten Auftragungsschritt eine erste Teilkontur (24) der Oberflächenkontur (24) mit einer ersten Materialpaste erzeugt und
- in einem zweiten Auftragungsschritt eine zweite Teilkontur (26) der Oberflächenkontur (22) mit einer zweiten Materialpaste erzeugt,
- sodass sich die die beiden Teilkonturen (24, 26) im Wesentlichen überlappungsfrei zur Oberflächenkontur (24) der metallischen Schicht (14) ergänzen.

6. Verfahren nach Anspruch 5, **dadurch gekennzeichnet, dass** die erste Materialpaste weichmagnetische metallische Partikel enthält und die zweite Materialpaste unmagnetische Stahlpartikel enthält.

7. Verfahren nach Anspruch 6, **dadurch gekennzeichnet, dass** die weichmagnetischen Partikel (30) mindestens 96 Gew. % Eisen enthalten.

8. Verfahren nach Anspruch 6 oder 7, **dadurch gekennzeichnet, dass** die unmagnetischen Stahlpartikel (32) eine Eisen-Chrom-Nickel-Legierung umfassen.

9. Verfahren nach einem der vorhergehenden Ansprüche, **dadurch gekennzeichnet, dass** die metallische Schicht (14) im Wesentlichen die Endkontur des Magnetblechs aufweist.

10. Verfahren nach einem der vorhergehenden Ansprüche, **dadurch gekennzeichnet, dass** die elektrisch isolierende Schicht (4) durch ein Dünnschichtverfahren (15) in Form eines Sprühverfahren (15-1) oder eines Rakelverfahren (22-4), insbesondere ein Schablonendruckverfahren oder Siebdruckverfahren oder ein Schlickerverfahren aufgebracht wird.

11. Verfahren nach einem der vorhergehenden Ansprüche, **dadurch gekennzeichnet, dass** die elektrisch isolierende Schicht (14) Oxide, Nitride, Carboxyde, Carbonate, Ferrite, insbesondere Aluminiumoxid (Al₂O₃) oder Eisentitanat (FeTiOs) umfasst.

12. Verfahren nach einem der vorhergehenden Ansprüchen, **dadurch gekennzeichnet, dass** mehrere Schichtlaminate (18-1), die im Wesentlichen die Endkontur des Magnetblechs (2) aufweisen, in einem Grünzustand zu einem Stapel (34) zusammengeführt werden und als Stapel (3) im Grünzustand dem Sinterprozess (20) zugeführt werden.

13. Verfahren nach einem der vorhergehenden Ansprüche, **dadurch gekennzeichnet, dass** das Substrat (6) kontinuierlich bewegt wird und die elektrisch isolierende Schichtung (4) und die metallische Schicht (14) mittels stationärer Vorrichtungen auf das Substrat (4) aufgebracht werden.

14. Blechpaket für eine elektrische Maschine (38) umfassend einen Stapel (34-2) von Magnetblechen (2), wobei das Blechpaket abwechselnd eine metallische Schicht (14-2) und eine elektrisch isolierende, anorganische, nichtmetallische Schicht (4-2) aufweist, wobei das Blechpaket (36) mittels eines Verfahren nach einem der Ansprüche 1 bis 13 bereitgestellt wird.

15. Elektrische Maschine umfassend ein Blechpaket (36) nach Anspruch 14 als Stator (42) und/oder Rotor (40).
